# EUROPÄISCHE PATENTSCHRIFT

(11) **EP 0 658 754 B1**
(45) Veröffentlichungstag und Bekanntmachung des Hinweises auf die Patenterteilung: **30.07.1997**
(21) Anmeldenummer: 93810874.3
(22) Anmeldetag: 14.12.1993
(51) Int. Cl.: G01L 9/00

(54) **Druckmessanordnung**
Pressure measuring arrangement
Arrangement pour mesurer une pression

(43) Veröffentlichungstag der Anmeldung: 21.06.1995
(73) Patentinhaber: ENVEC Mess- und Regeltechnik GmbH + Co., 79576 Weil am Rhein (DE)
(72) Erfinder: Donner, Arno Dipl. Ing., D-34277 Fuldabrück (DE); Gill, Norbert, D-34246 Vellmar (DE); Lange, Jürgen Dipl. Ing., D-34246 Vellmar (DE); Schröbel, Volker, D-34298 Helsa (DE); Schade, Rolf, Dipl.Ing., D-34130 Kassel (DE)
(74) Vertreter: Morstadt, Volker, Dipl.-Ing. c/o Endress + Hauser Flowtec AG

(56) Entgegenhaltungen:
- WO-A-91/04475
- DE-A- 3 840 703
- PATENT ABSTRACTS OF JAPAN vol. 7, no. 48 (P-178) 24. Februar 1983 & JP-A-57 197 435 (HITACHI SEISAKUSHO K.K.) 3. Dezember 1982

## Beschreibung

Die Erfindung betrifft Druckmeßanordnungen mit einem einen Grundkörper und eine zugehörige Membran mit darauf aufgebrachten Dehnmeßstreifen aufweisenden Drucksensor.

Von der Anmelderin wird bereits seit einiger Zeit eine Druckmeßanordnung in den Verkehr gebracht, die umfaßt:
- einen einen Grundkörper und eine zugehörige Membran mit darauf aufgebrachten Dehnmeßstreifen aufweisenden Drucksensor,
- einen Isolierstoff-Sockel mit Anschlußdrähten und mit einem Öl-Einfüllstutzen,
   -- auf welchem Isolierstoff-Sockel der Grundkörper befestigt ist und
   -- mit welchen Anschlußdrähten die Dehnmeßstreifen elektrisch kontaktiert sind,
- einen Metallkörper mit einer ersten zentralen Ausnehmung in einer ersten Querschnittsfläche, mit einer zweiten zentralen Ausnehmung in einer von der ersten Querschnittsfläche abgewandten zweiten Querschnittsfläche und mit einer die erste Ausnehmung mit der zweiten Ausnehmung verbindenden Bohrung,
   -- welche erste Querschnittsfläche an ihrem Rand mit dem Isolierstoffsockel dicht verbunden ist und
   -- welche erste Ausnehmung den Grundkörper und die Membran, ohne diese zu berühren, aufnimmt,
- eine in die zweite Ausnehmung eingesetzte und sie an ihrem Rand verschließende metallische Trennmembran und
- eine in die Ausnehmungen und die Bohrung eingebrachte Ölfüllung.

Diese öffentlich vorbenutzte Druckmeßanordnung ist hinsichtlich der Unempfindlichkeit gegenüber elektromagnetisch eingestrahlten Störungen und gegenüber aus der Ölfüllung stammenden Ladungseinflüssen sowie hinsichtlich der Langzeitstabilität noch weiter verbesserungsbedürftig.

Zur Erreichung dieser Ziele besteht die Erfindung daher in einer Druckmeßanordnung, die umfaßt:
- einen einen Grundkörper und eine zugehörige Membran mit darauf aufgebrachten Dehnmeßstreifen aufweisenden Drucksensor,
- einen Isolierstoff-Sockel mit Anschlußdrähten und mit einem Öl-Einfüllstutzen,
   -- auf welchem Isolierstoff-Sockel der Grundkörper befestigt ist und
   -- mit welchen Anschlußdrähten die Dehnmeßstreifen elektrisch kontaktiert sind,
- einen Metallkörper mit einer ersten zentralen Ausnehmung in einer ersten Querschnittsfläche, mit einer zweiten zentralen Ausnehmung in einer von der ersten Querschnittsfläche abgewandten zweiten Querschnittsfläche und mit einer die erste Ausnehmung mit der zweiten Ausnehmung verbindenden Bohrung,
   -- welche erste Querschnittsfläche an ihrem Rand mit dem Isolierstoffsockel dicht verbunden ist und
   -- welche erste Ausnehmung den Grundkörper und die Membran, ohne diese zu berühren, aufnimmt,
- eine in die zweite Ausnehmung eingesetzte und sie an ihrem Rand verschließende metallische Trennmembran und
- eine in die Ausnehmungen und die Bohrung eingebrachte Ölfüllung, die die Dehnmeßstreifen bedecket,
- eine elektrisch leitende Folie mit einer Öffnung für das Öl,
   -- welche Folie in der ersten Ausnehmung möglichst nahe bei den Dehnmeßstreifen, sie überdeckend, aber sie nicht berührend, angeordnet und mit einem Schaltungsnullpunkt verbunden ist.

Nach einer bevorzugten Weiterbildung der Erfindung ist eine durch den Isolierstoffsockel und durch den Grundkörper öldicht hindurchführende Druckzufuhr-Leitung vorgesehen.

Nach einer anderen bevorzugten Weiterbildung ist eine sockelseitige gehäuse-artige Verlängerung des Metallkörpers vorgesehen.

Diese Weiterbildung kann noch dadurch verbessert werden, daß eine weitere elektrisch leitenden Folie entlang der Innenseite der Verlängerung angeordnet und mit einem Schaltungsnullpunkt verbunden ist.

Die Erfindung wird nun anhand der Zeichnung näher erläutert, in der schematisch Ausführungsbeispiele der Erfindung gezeigt und in deren Figuren gleiche Teile mit denselben Bezugszeichen bezeichnet sind.
- Fig. 1: zeigt in perspektivischer Explosionsdarstellung die für die Drucksensor-Funktion wesentlichen Teile der Druckmeßanordnung,
- Fig. 2: zeigt in Schnittansicht eine fertige Druckmeßanordnung, und
- Fig. 3: zeigt in Schnittansicht eine Weiterbildung der Druckmeßanordnung nach Fig. 2.

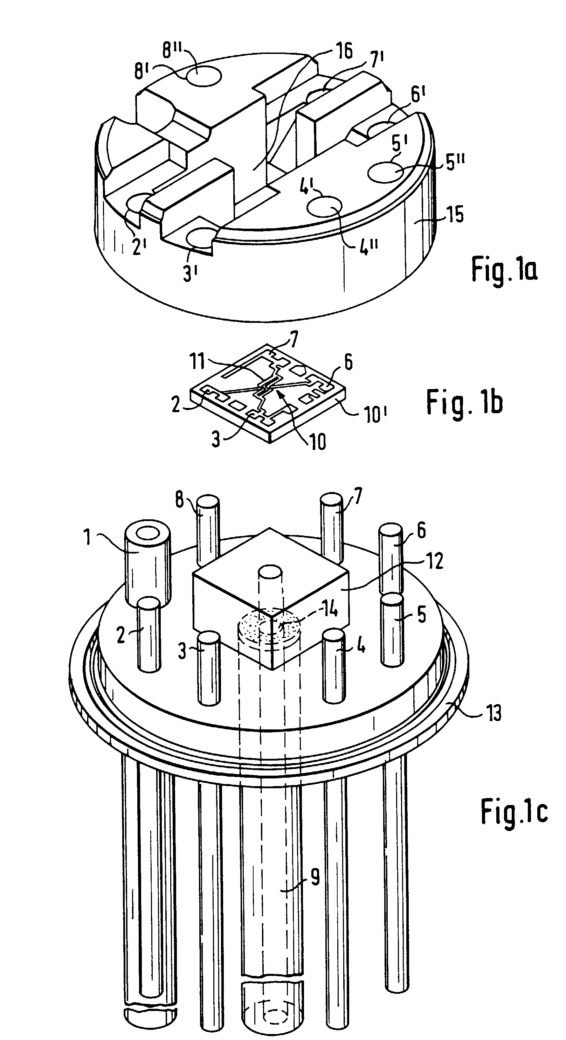

In Fig. 1 sind in perspektivischer Explosionsdarstellung die für die Drucksensor-Funktion wesentlichen Teile einer Druckmeßanordnung nach der Erfindung gezeigt. Ein Drucksensor umfaßt eine Membran 10 und einen Grundkörper 12, die im Zentrum eines Substrats 10' dadurch gebildet ist, daß das Substrat 10' in der Zeichnung von unten mit einer Ausnehmung versehen ist und somit die Membran 10 einen dünneren Zentralbereich des Substrats 10' darstellt. Auf der Membran 10 sind Dehnmeßstreifen 11 aufgebracht, die mittels Leitbahnen mit am Rande der Membran vorgesehenen Anschlußpads verbunden sind.

Die Membran 10 besteht z.B. aus Glas oder Silicium. Die Dehnmeßstreifen 11 bestehen aus polykristallinem Silicium, sogenanntem Polysilicium, das im Falle einer Glas-Membran direkt und im Falle einer Silicium-Membran auf einer darauf vorhandenen SiO₂-Schicht abgeschieden worden ist. Der Grundkörper 12 besteht z.B. aus Glas oder Silicium.

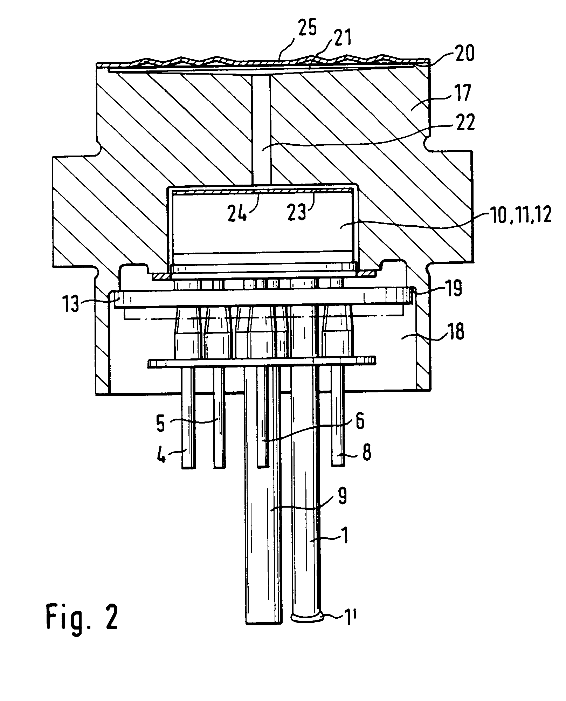

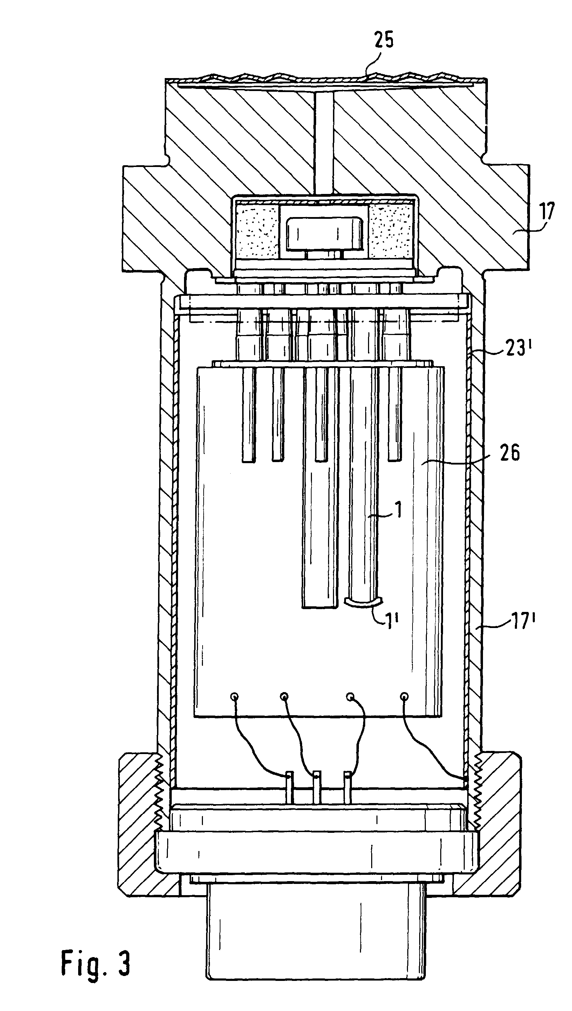

Ein Isolierstoff-Sockel 13 ist mit Anschlußdrähten 2, 3, 4, 5, 6, 7, 8 und mit einem Öl-Einfüllstutzen 1 versehen, der nach dem Einfüllen des Öls dicht verschlossen wird, vgl. in den Fig. 2 und 3 den Verschluß 1'. Der Isolierstoff-Sockel 13 ist im übrigen wie der Sockel eines aus der Halbleitertechnik bekannten, sogenannten TO-8-Gehäuses ausgebildet.

Ist die Druckmeßanordnung als Differenzdrucksensor ausgebildet, so sind im Isolierstoff-Sockel 13 ferner noch eine Druckzufuhr-Leitung 9 und im Grundkörper 12 eine zentrale Bohrung 14 vorgesehen, in der sich die Druckzufuhr-Leitung 9 fortsetzt.

Auf dem Isolierstoff-Sockel 13 ist der Grundkörper 12 zentral befestigt. Die Dehnmeßstreifen 11 sind mit den Anschlußdrähten 2 ... 8 des Isolierstoff-Sockels 13 elektrisch, z.B. mittels Thermokompressions-Bonddrähten, kontaktiert.

Das Substrat 10' ist auf dem Grundkörper 12 unter Bildung einer Kammer, z.B. entlang von den beiden Rändern, dicht befestigt, so daß die Membran 10 sich unter Druckeinwirkung durchbiegen kann, was in den Dehnmeßstreifen eine Widerstandsänderung hervorruft.

Auf die auf der Seite des Grundkörpers 12 aus dem Isolierstoff-Sockel 13 hervorstehenden Anschlußdrähte 2 ... 8 ist ein Isolierstoffteil 15 mittels dazu passenden Löchern 2', 3', 4', 5', 6', 7', 8' aufgesetzt, das eine dem Grundkörper 12 entsprechende Zentralöffnung 16 hat.

In der Schnittansicht einer fertigen Druckmeßanordnung nach Fig. 2 ist ein Metallkörper 17 zu sehen, der eine erste zentralen Ausnehmung 18 von einer ersten äußeren Querschnittsfläche 19 aus nach innen aufweist. An ihrem Rand ist die erste Querschnittsfläche 19 mit dem Isolierstoff-Sockel 13 dicht verbunden.

In einer von der ersten Querschnittsfläche 19 abgewandten zweiten Querschnittsfläche 20 ist eine zweite zentrale Ausnehmung 21 vorgesehen, die gegenüber der ersten Ausnehmung 18 sehr flach ist. Die beiden Ausnehmungen 18, 21 sind mittels einer Bohrung 22 im Metallkörper 17 miteinander verbunden.

In der ersten Ausnehmung 18 sind der Grundkörper 12 mit dem Substrat 10' und der Membran 10 sowie das Isolierstoffteil 15 so aufgenommen, daß diese von den Innenwänden der Ausnehmung 18 nicht berührt werden.

In der ersten Ausnehmung 18 ist möglichst nahe bei den Dehnmeßstreifen 11 eine elektrisch leitende Folie 23 mit einer zentralen Öffnung 24 so angeordnet, daß sie zwar mindestens die Dehnmeßstreifen 11, insb. aber das gesamte Substrat 10' mit der Membran 10, überdeckt, diese Teile jedoch nicht berührt.

Die Folie 23 ist zusammen mit einem elektrischen Anschluß des Substrats 10' mit einem Schaltungsnullpunkt, also z.B. mit Massepotential, zu verbinden. Dies kann z.B. durch leitendes Verkleben der Folie 23 mit zu den Anschlußdrähten 4, 5, 8 gehörenden Metallflächen 4'', 5'', 8'' des Isolierstoffteils 15 geschehen (vgl. Fig. 1), welche Anschlußdrähte am Einsatzort der Druckmeßanordnung dann mit einem dortigen Schaltungsnullpunkt zu verbinden sind.

Eine metallische Trennmembran 25 ist in die zweite Ausnehmung 21 eingesetzt und mit dieser an ihrem Rand dicht verschlossen. In die beiden Ausnehmungen 18, 21 und die Bohrung 22 ist mittels des Öleinfüllstutzens eine Ölfüllung eingebracht, die als Druckübertragungsmittel von dem außerhalb der Trennmembran 25 vorhandenen Druck zur Membran 10 dient.

Obwohl wegen der erwähnten Öffnung 24 in der Folie 23 bei der Anordnung nach der Erfindung wie bei der vorbenutzten Anordnung das eingefüllte Öl die Dehnmeßstreifen 11 bedeckt, tritt die nicht zu erwartende und überraschende Wirkung ein, daß nicht nur elektromagnetisch eingestrahlte Störungen unterdrückt werden, sondern auch daß von der Eigenschaft der Ölfüllung als sehr guter elektrischer Nichtleiter hervorgerufene und auf deren elektrische Aufladung zurückzuführende Beeinflussungen der druckabhängigen Widerstandsänderungen der Dehnmeßstreifen weitestgehend vermieden werden.

In Fig. 3 ist eine Weiterbildung der Anordnung nach Fig. 2 ebenfalls in Schnittansicht gezeigt. Der Metallkörper 17 ist mit einer sockelseitigen, gehäuse-artigen Verlängerung 17' versehen, worin eine mit den Dehnmeßstreifen 11 verbundene Schaltungsplatine 26 untergebracht ist, auf der sich eine Kompensationsschaltung, insb. Temperatur-Kompensationsschaltung, befindet.

In bevorzugter Weiterbildung der Erfindung ist eine weitere elektrisch leitenden Folie 23' entlang der Innenseite der Verlängerung 17' angeordnet, die wie die Folie 23 mit einem Schaltungsnullpunkt zu verbinden ist.

## Patentansprüche

1. Druckmeßanordnung, die umfaßt:
- einen einen Grundkörper (12) und eine zugehörige Membran (10) mit darauf aufgebrachten Dehnmeßstreifen (11) aufweisenden Drucksensor,
- einen Isolierstoff-Sockel (13) mit Anschlußdrähten (2, 3, 4, 5, 6, 7, 8) und
mit einem Öl-Einfüllstutzen (1),
-- auf welchem Isolierstoff-Sockel der Grundkörper befestigt ist und
-- mit welchen Anschlußdrähten die Dehnmeßstreifen elektrisch kontaktiert sind,
- einen Metallkörper (17) mit einer ersten zentralen Ausnehmung (18) in einer ersten Querschnittsfläche (19), mit
einer zweiten zentralen Ausnehmung (21) in einer von der ersten Querschnittsfläche abgewandten zweiten Querschnittsfläche (20) und mit einer die erste Ausnehmung mit der zweiten Ausnehmung verbindenden Bohrung (22),
-- welche erste Querschnittsfläche an ihrem Rand mit dem Isolierstoff-Sockel dicht verbunden ist und
-- welche erste Ausnehmung den Grundkörper und die Membran, ohne diese zu berühren, aufnimmt,
- eine in die zweite Ausnehmung eingesetzte und sie an ihrem Rand verschließende metallische Trennmembran (25) und
- eine in die Ausnehmungen und die Bohrung eingebrachte Ölfüllung, die die Dehmeßstreifen (11) bedeckt, gekennzeichnet durch
- eine elektrisch leitende Folie (23) mit einer Öffnung (24) für das Öl der Ölfüllung,
-- welche Folie in der ersten Ausnehmung möglichst nahe bei den Dehnmeßstreifen, sie überdeckend, aber sie nicht berührend, angeordnet und mit einem Schaltungsnullpunkt verbunden ist.

2. Druckmeßanordnung nach Anspruch 1 mit einer durch den Isolierstoff-Sockel (13) und durch den Grundkörper (12) öldicht hindurchführenden Druckzufuhr-Leitung (9).

3. Druckmeßanordnung nach Anspruch 1 oder 2 mit einer sockelseitigen gehäuse-artigen Verlängerung (17') des Metallkörpers (17).

4. Druckmeßanordnung nach Anspruch 3 mit einer weiteren elektrisch leitenden Folie (23'), die entlang der Innenseite der Verlängerung (17') angeordnet und mit einem Schaltungsnullpunkt verbunden ist.

## Claims

1. A pressure-measuring arrangement comprising:
- a preseure sensor having a base (12) and an associated diaphragm (10) with strain gages (11) deposited thereon;
- a header (13) of insulating material with leads (2, 3, 4, 5, 6, 7, 8) and with an oil filler neck (1),
-- said header of insulating material having the base mounted therson, and
-- said leads making electrical contacts to the strain gages;
- a metal body (17) having a first central recess (18) in a first cross-sectional surface (19),
- a second central recess (21) in a second cross-sectional surface (20) facing away from the first cross-sectional surface, and a hole (22) connecting the first recess with the second recess,
-- said first cross-sectional surface being tightly joined at its edge to the header of insulating material, and
-- said first recess accommodating the substrate and the diaphragm without touching them;
- a metallic separating diaphragm (25) fitted in the second recess and closing the latter at its edge; and
- an oil fill in the recesses and in the hole, which oil fill covers the strain gauges (11);
characterized by
- an electrically conductive foil (23) having an opening (24) for the oil of the oil fill,
-- said foil being disposed in the first recess as close as possible to, and covering but not touching, the strain gages and connected to ground.

2. A presaure-measuring arrangement as claimed in claim 1, comprising a preseure feed pipe (9) extending through the header (13) of ineulating material and the base (12) so as to ensure oil tightness.

3. A pressure-measuring arrangement as claimed in claim 1 or 2, comprising a caselike extension (17') of the metal body (17) on the header side.

4. A pressure-measuring arrangement as claimed in claim 3, comprising a further electrically conductive foil (23') which is provided along the inside of the extension (17') and connected to ground.

## Revendications

1. Dispositif de mesure de pression qui comprend :
- un capteur de pression comprenant un corps de base (12) et d'une membrane (10) correspondante sur le dessus de laquelle se trouvent des jauges de contrainte (11),
- un socle isolant (13) comprenant des fils de connexion (2, 3, 4, 5, 6, 7, 8) et une tubulure (1) de remplissage d'huile,
-- le corps de base étant fixé sur le socle isolant, et
-- les jauges de contrainte étant électriquement en contact avec les fils de connexion,
- un corps métallique (17) comprenant une première partie centrale (18) en creux dans une première surface transversale (19),
une seconde partie centrale (21) en creux dans une seconde surface transversale (20) placée à l'opposé de la première surface transversale, et un perçage (22) reliant la première partie en creux à la seconde partie en creux,
-- laquelle première surface transversale, sur son bord, est reliée de façon étanche au socle isolant, et
-- laquelle première partie en creux loge le corps de base et la membrane sans être au contact de ces éléments,
- une membrane métallique (25) de séparation introduite dans la seconde partie en creux et obturant ladite seconde partie en creux au niveau de son bord, et
- un dispositif de remplissage d'huile, pratiqué dans les parties en creux et dans le perçage, qui recouvre les jauges de contrainte (11),
caractérisé par
- une feuille (23) électriquement conductrice, dotée d'une ouverture (24) pour l'huile du dispositif de remplissage d'huile,
-- laquelle feuille est disposée dans la première partie en creux, le plus près possible des jauges de contraintes, les recouvrant mais sans venir en contact avec elles, et qui est connectée à un point zéro du circuit.

2. Dispositif de mesure de pression selon la revendication 1, comprenant une conduite (9) d'alimentation par pression, étanche à l'huile, traversant le socle isolant (13) et le corps de base (12).

3. Dispositif de mesure de pression selon la revendication 1 ou 2, comprenant, côté socle, un prolongement (17') du corps métallique (17), en forme de boîtier.

4. Dispositif de mesure de pression selon la revendication 3, comprenant une autre feuille (23') électriquement conductrice qui est disposée le long du côté intérieur du prolongement (17') et qui est connectée à un point zéro du circuit.
